(19) Europäisches Patentamt
European Patent Office
Office européen des brevets

(11) **EP 4 029 905 A1**

(12) **EUROPEAN PATENT APPLICATION**
published in accordance with Art. 153(4) EPC

(43) Date of publication:
**20.07.2022 Bulletin 2022/29**

(21) Application number: **21775300.3**

(22) Date of filing: **19.03.2021**

(51) International Patent Classification (IPC):
*C08J 5/18* (2006.01)    *B32B 7/027* (2019.01)
*B32B 27/34* (2006.01)    *H01M 50/10* (2021.01)

(52) Cooperative Patent Classification (CPC):
**B32B 7/027; B32B 27/34; C08J 5/18; H01M 50/10;**
Y02E 60/10

(86) International application number:
**PCT/JP2021/011402**

(87) International publication number:
**WO 2021/193439 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2020  JP 2020056317**

(71) Applicant: **Unitika Ltd.**
**Osaka-shi**
**Osaka 541-8566 (JP)**

(72) Inventors:
• **YAMANE, Shuhei**
**Uji-shi, Kyoto 611-0021 (JP)**
• **KUROSAWA, Akiko**
**Uji-shi, Kyoto 611-0021 (JP)**

(74) Representative: **Novagraaf International SA**
**Chemin de l'Echo 3**
**1213 Onex, Geneva (CH)**

(54) **POLYAMIDE 6 RESIN FILM**

(57)    A polyamide 6 resin film characterized in that the extrapolated melting initiation temperature ($T_{im}$) when heated from 50°C to 260°C at a heating rate of 5°C/min in differential scanning calorimetry (DSC) is 216.0°C or higher.

EP 4 029 905 A1

**Description**

Technical Field

The present invention relates to a novel polyamide 6 resin film, and further to a laminated product and packaging material comprising the same, and in particular to a battery using that packaging material.

Background Art

Polyamide 6 resin films have excellent mechanical properties such as tensile strength, puncture strength, pinhole strength, and impact resistance, as well as excellent gas barrier properties and heat resistance. For this reason, laminated films in which a polyamide 6 resin film is used as the base material and a sealant film made of polyolefin resin is affixed to it by a method such as dry lamination or extrusion lamination have been widely used in packaging materials and other applications.

In recent years, for packaging materials in which a sealant film is laminated on the base material, there has been a strong demand to set the heat sealing temperature to a temperature higher than the conventional temperature in order to shorten the heat sealing time for the purpose of improving the productivity of the heat sealing step. However, when the heat sealing temperature is high, the polyamide 6 resin film, base material, may be heat fused to the sealing bar.

In particular, in the case of packaging materials used as exterior materials for batteries, since the sealant layer tends to be thick in order to prevent leakage of the electrolytic solution, and since a metal layer with high thermal conductivity tends to be provided as an intermediate layer from the viewpoint of barrier properties and shape retention, which requires a high temperature and a long time during heat sealing, resulting in an increased amount of heat, the polyamide 6 resin film, base material, is more likely to be heat fused to the sealing bar.

One method to prevent heat fusion of the base material to the sealing bar is to coat the surface of the base material with a high melting point resin such as polytetrafluoroethylene. Also, a method of using as the base material a bilayer film in which polyester, which has a higher melting point than the polyamide 6 resin, is integrated with the polyamide 6 resin by coextrusion has been proposed (Patent Literatures 1 and 2). In addition, a method of using two types of polyamide resin layers with different melting points as the base material and arranging the polyamide resin layer with a higher melting point on the outside has been proposed (Patent Literature 3).

Citation List

Patent Literature

Patent Literature 1: Japanese Patent Laid-Open No. 2015-156403
Patent Literature 2: Japanese Patent Laid-Open No. 2016-62805
Patent Literature 3: Japanese Patent Laid-Open No. 2018-196929

Summary of Invention

Technical Problem

However, the base material formed by coating the surface of the polyamide 6 resin film with a high melting point resin such as polytetrafluoroethylene requires high production costs and also poses a problem of reduced moldability. In the base material formed by coextruding different types of resins composed of polyester and polyamide 6 resin, the joining properties between the layers are not good, thus requiring a special adhesive, which results in higher production costs than coextrusion of the same type of resins, and also poses a problem of reduced moldability when compared to a single layer film of polyamide 6 resin. Also, even when the base material has a polyamide resin layer with a high melting point, if the polyamide resin layer with a high melting point has a broad melting peak, there is a problem that the low molecular weight component of the polyamide is melted at a temperature lower than the melting point.

In view of the problems mentioned above, an object of the present invention is to provide a polyamide 6 resin film that, in a laminated product having a sealant film laminated therein, suppresses resin attachment to the sealing bar even when heat sealed at a high temperature, and also has excellent moldability.

Solution to Problem

As a result of diligent investigations to solve the problems described above, the present inventors have found that the above problems can be solved by using a polyamide 6 resin film with specific heat characteristics, and have reached the present invention.

That is, the gist of the present invention is as follows.

A polyamide 6 resin film of the present invention is characterized in that the film has an extrapolated melting initiation temperature ($T_{im}$) of 216.0°C or higher when heated from 50°C to 260°C at a heating rate of 5°C/min in differential scanning calorimetry (DSC).

According to the polyamide 6 resin film of the present invention, it is preferable that the amount of caprolactam monomer extracted is 0.1% by mass or less.

According to the polyamide 6 resin film of the present invention, it is preferable that, in each of the following four directions on a surface of the polyamide 6 resin film: in an arbitrary point on the polyamide 6 resin film, an arbitrary direction defined as 0 degrees, and directions that form 45 degrees, 90 degrees, and 135 degrees clockwise from that direction,

the difference between the maximum value and the minimum value of each stress at 5% elongation by a uniaxial tensile test is 35 MPa or less, and
the difference between the maximum value and the minimum value of each stress at 15% elongation by a uniaxial tensile test is 40 MPa or less.

According to the polyamide 6 resin film of the present invention, it is preferable that the coefficient of variation (CV) for thickness is 0.04 or less in the following eight directions on a surface of the polyamide 6 resin film: in an arbitrary point on the polyamide 6 resin film, an arbitrary direction defined as 0 degrees, and directions that form 45 degrees, 90 degrees, 135 degrees, 180 degrees, 225 degrees, 270 degrees, and 315 degrees clockwise from that direction.

According to the polyamide 6 resin film of the present invention, it is preferable that the polyamide 6 resin film is biaxially oriented.

A laminated product of the present invention is one in which the polyamide 6 resin film described above and a sealant layer are laminated.

According to the laminated product of the present invention, it is preferable that the laminated product has a barrier layer between the polyamide 6 resin film and the sealant layer.

According to the laminated product of the present invention, it is preferable that the sealant layer has a thickness of 100 to 200 μm.

A packaging material of the present invention is one using the laminated product described above.

A battery of the present invention is one using the packaging material described above.

Advantageous Effects of Invention

Since the polyamide 6 resin film of the present invention can, in a laminated product having a sealant film laminated therein, suppress attachment of the polyamide 6 resin to the sealing bar even when heat sealed at a high temperature, and also has excellent moldability, it is suitable as a packaging material that requires heat sealing, and particularly suitable as a packaging material for batteries where the polyamide 6 resin tends to be attached to the sealing bar.

Description of Embodiments

<Material and Structure of Polyamide 6 Resin Film>

In the polyamide 6 resin film of the present invention, the extrapolated melting initiation temperature ($T_{im}$) is 216.0°C or higher when heated from 50°C to 260°C at a heating rate of 5°C/min in differential scanning calorimetry (DSC).

The film of the present invention comprises polyamide 6 resin as the main component and may comprise components other than the polyamide 6 resin as required to the extent that they do not interfere with the effects of the present invention, but the content of polyamide 6 resin in the film of the present invention is preferably 70% by mass or more, more preferably 80% by mass or more, and still more preferably 90% by mass or more.

The upper limit of the polyamide 6 resin content is not particularly limited, and can be about 100% by mass. Accordingly, the content of polyamide 6 resin can be, for example, 95 to 100% by mass.

The film of the present invention is preferably at least uniaxially oriented, and more preferably biaxially oriented.

Also, the film of the present invention may be of a single layer or multiple layers.

<Polyamide 6 Resin>

The resin constituting the film of the present invention is, for example, a polyamide 6 resin made from ε-caprolactam, and to the extent that it does not interfere with the effects of the present invention, it may be copolymerized with a 3- or higher-membered ring lactam, ω-amino acid, dibasic acid, diamine, or the like.

Examples of the lactam constituting the copolymer may include enantholactam, capryllactam, and lauryl lactam.

Examples of the ω-amino acid may include 7-aminoheptanoic acid, 8-aminooctanoic acid, 9-aminononanoic acid, 11-aminoundecanoic acid, and 12-aminododecanoic acid.

Examples of the dibasic acid may include oxalic acid, malonic acid, succinic acid, glutaric acid, adipic acid, glutaric acid, pimelic acid, suberic acid, azelaic acid, sebacic acid, undecanedioic acid, dodecadioic acid, hexadecadioic acid, eicosanedioic acid, eicosadienedioic acid, 2,2,4-trimethyladipic acid, terephthalic acid, isophthalic acid, 2,6-naphthalenedicarboxylic acid, xylylenedicarboxylic acid, and dimeric acid.

Examples of the diamine may include ethylenediamine, trimethylenediamine, tetramethylenediamine, hexamethylenediamine, pentamethylenediamine, undecamethylenediamine, 2,2,4(or 2,4,4)-trimethylhexamethylenediamine, cyclohexanediamine, bis-(4,4'-aminocyclohexyl)methane, meta-xylylenediamine, nonanediamine, and decanediamine.

The film of the present invention may consist solely of the polyamide 6 resin described above, or a mixture of two or more types.

For the polyamide 6 resin in the present invention, regenerated monomers may be used for some or all of the raw material monomers, or it may be a mixture of polyamide 6 resin obtained by using regenerated monomers for some or all of the raw material monomers and polyamide 6 resin obtained by using only virgin monomers. Note that the term "regenerated monomer" refers to monomer that has been regenerated by chemically decomposing polyamide 6 resin through a method such as depolymerization.

The relative viscosity of polyamide 6 resin is preferably 2.0 to 4.0, and still more preferably 3.0 to 4.0. When the relative viscosity of polyamide 6 resin is below 2.0, the dynamic characteristics of the resulting film tend to be degraded. On the other hand, when the relative viscosity of polyamide 6 resin exceeds 4.0, the pressure applied to the filtration filter through which it passes is increased during extrusion, which shortens the service life of the filtration filter and reduces the runnability, and the stretching stress is increased in the stretching step, which may reduce the stretchability.

Note that the relative viscosity in the present invention is the value measured using a Ubbelohde type viscometer for a sample solution (liquid temperature: 25°C) in which the polyamide 6 resin is dissolved in 96% sulfuric acid so as to reach a concentration of 1.0 g/dL.

<Physical Properties of Polyamide 6 Resin Film>

In the film of the present invention, the extrapolated melting initiation temperature ($T_{im}$) when heated from 50°C to 260°C at a heating rate of 5°C/min in differential scanning calorimetry (DSC) needs to be 216.0°C or higher, and it is preferably 217.0°C or higher, still more preferably 218.0°C or higher, and most preferably 219.0°C or higher.

If the extrapolated melting initiation temperature ($T_{im}$) of polyamide 6 resin film is lower than 216.0°C, when a laminated product having a sealant layer laminated therein is heat sealed at a high temperature, the film is heat fused to the sealing bar, resulting in reduced heat sealability.

Also, in the film of the present invention, the difference between the peak melting temperature ($T_{pm}$) when heated from 50°C to 260°C at a heating rate of 5°C/min in differential scanning calorimetry (DSC) and the extrapolated melting initiation temperature ($T_{im}$) described above, ($T_{pm} - T_{im}$), is preferably 7.0°C or less, more preferably 6.5°C or less, and still more preferably 6.0°C or less.

If the difference ($T_{pm} - T_{im}$) described above exceeds 7.0°C in the polyamide 6 resin film, when a laminated product having a sealant layer laminated therein is heat sealed at a temperature close to the peak melting temperature ($T_{pm}$), the film may be heat fused to the sealing bar.

In the film of the present invention, the peak melting temperature ($T_{pm}$) is preferably 217.0°C or higher, more preferably 220.0°C or higher, and still more preferably 222.0°C or higher.

In the film of the present invention, from the viewpoint of preventing heat fusion to the sealing bar, the amount of caprolactam monomer extracted is preferably 0.1% by mass or less, more preferably 0.05% by mass or less, and still more preferably 0.02% by mass or less. In the polyamide 6 resin film, if the amount of caprolactam monomer extracted exceeds 0.1% by mass, the monomer component is eluted during heat sealing. Then, when heat sealing is continuously performed, the eluted monomer component begins to deposit on the sealing bar, and even when the extrapolated melting initiation temperature ($T_{im}$) is 216.0°C or higher, the polyamide 6 resin film gradually tends to become heat fused to the sealing bar where the monomer component has deposited, and the continuous productivity of heat sealing may be reduced.

In the film of the present invention, from the viewpoint of improving molding processability, the stress at 5% elongation by a uniaxial tensile test is preferably 35 to 130 MPa, more preferably 40 to 90 MPa, and still more preferably 45 to 85 MPa in each of the following four directions on the film surface: in an arbitrary point on the polyamide 6 resin film, an arbitrary direction defined as 0 degrees, and directions that form 45 degrees, 90 degrees, and 135 degrees clockwise from that direction. In addition, the difference between the maximum value and the minimum value of each stress is preferably 35 MPa or less, more preferably 30 MPa or less, still more preferably 25 MPa or less, and most preferably 20 MPa or less.

Also, in the film of the present invention, the stress at 15% elongation by a uniaxial tensile test is preferably 55 to 145 MPa, more preferably 60 to 140 MPa, and still more preferably 60 to 130 MPa. In addition, the difference between the maximum value and the minimum value of each stress is preferably 40 MPa or less, more preferably 38 MPa or less, still more preferably 34 MPa or less, and most preferably 30 MPa or less.

Note that the aforementioned arbitrary direction of 0 degrees is not particularly limited, and for example, MD in the stretching step during film production can be defined as 0 degrees.

When the polyamide 6 resin film does not meet the stress conditions described above, in a laminated product having a sealant layer laminated therein, the stress balance in all directions may be poor, making it difficult to obtain uniform moldability. In addition, in a laminated product having a metal foil laminated between the inventive film and a sealant layer, during cold molding, the metal foil is not provided with sufficient ductility, which thus increases the possibility of breaking of the metal foil, delaminations, pinholes, and other defects.

The thickness of the polyamide 6 resin film of the present invention is not particularly limited, as it is selected as appropriate depending on the type of contents. However, from the demand for miniaturization of the package, it is preferably 30 μm or less, and especially, it is more preferably 25 μm or less, and still more preferably 15 μm or less.

In the polyamide 6 resin film of the present invention, as an index to show that the thickness accuracy (thickness uniformity) is very high, the coefficient of variation (CV) for thickness is preferably 0.04 or less, more preferably 0.035 or less, and still more preferably 0.02 or less in the following eight directions on the film surface: in an arbitrary point on the polyamide 6 resin film, an arbitrary direction defined as 0 degrees, and directions that form 45 degrees, 90 degrees, 135 degrees, 180 degrees, 225 degrees, 270 degrees, and 315 degrees clockwise from that direction. When the coefficient of variation for thickness in the polyamide 6 resin film is 0.04 or less, the fluctuation in thickness on the surface of the film is very small, and even if the thickness of the film is about 15 μm or less, for example, when the film is affixed to a metal foil to form a laminated product and then subjected to deep drawing cold molding, no delaminations, pinholes, or other defects occur and good moldability can be obtained. When the coefficient of variation exceeds 0.04, the thickness accuracy becomes low. Therefore, especially in the case of a thin film, when it is affixed to a metal foil, the film cannot provide sufficient ductility to the metal foil, and the occurrence of delaminations or pinholes becomes noticeable and good moldability may not be obtained.

The film of the present invention may contain a pigment, a thermal stabilizer, an antioxidant, a weathering agent, a flame retardant, a plasticizer, a mold release agent, a reinforcing agent, and the like to the extent that the characteristics of the present invention are not impaired. Examples of the thermal stabilizer and antioxidant include a hindered phenol, a phosphorus compound, a hindered amine, a sulfur compound, a copper compound, and an alkali metal halide.

The film of the present invention may also contain an inorganic lubricant or an organic lubricant in order to improve the slip and other properties of the film. Specific examples of the lubricant include clay, talc, calcium carbonate, zinc carbonate, wollastonite, silica, alumina, magnesium oxide, calcium silicate, sodium aluminate, calcium aluminate, magnesium aluminosilicate, glass balloon, carbon black, zinc oxide, antimony trioxide, zeolite, hydrotalcite, layered silicate, and ethylenebisstearamide.

The film of the present invention may also be subjected to surface treatment such as corona discharge treatment or easy adhesion treatment to the extent that the effects of the present invention are not impaired.

<Method for Producing Polyamide 6 Resin Film>

The method for producing the film of the present invention is not particularly limited, and for example, the method below can be used to produce a polyamide 6 resin film with the physical properties as described above more reliably.

(Fabrication of Unstretched Sheet)

In the present invention, an unstretched sheet of polyamide 6 resin can be obtained by, in the case of a single layer structure, for example, heating and melting the polyamide 6 resin in an extruder, extruding it in the form of a sheet from a T-die, and cooling and solidifying it on a rotating cooling drum using a known casting method such as the air knife casting method or the electrostatic application casting method to create a single layer polyamide 6 resin sheet in an unstretched state. In the case of a multilayer structure, for example, a multilayer polyamide 6 resin sheet in an unstretched state can be obtained by using a general multilayering device such as a multilayer feed block, a static mixer, or a multilayer multimanifold.

(Monomer Removal)

In the film of the present invention, it is preferable that the amount of caprolactam monomer extracted is 0.1% by mass or less, as mentioned above, and it is preferable that the film production step includes a monomer removal step.
Since the amount of caprolactam monomer produced is increased when the polyamide 6 resin is melted, it is preferable that the monomer removal is carried out after the polyamide 6 resin is melted. It may be carried out either in the unstretched sheet stage or in the post-stretching stage, but from the viewpoint of monomer removal efficiency, it is preferably carried out at the unstretched sheet stage where the crystallization and orientation of the film are not advanced. Also, removing the monomer before the stretching step is preferable from the viewpoint of suppressing production step contamination, since the monomer is not released into the atmosphere during the stretching step.
The monomer removal can be carried out by contacting the unstretched sheet of polyamide 6 resin in a tension state with water in a monomer removal tank for 0.5 to 10 minutes.
The temperature of water in the monomer removal tank is preferably 20 to 70°C, more preferably 30 to 65°C, and still more preferably 40 to 55°C. When the water temperature in the monomer removal tank is lower than 20°C, it is difficult to remove the monomer in a short time. When the water temperature exceeds 70°C, wrinkles tend to be formed in the unstretched sheet, subsequent stretching becomes non-uniform, and the quality of the stretched film is deteriorated. Also, troubles such as cutting of the film or misgripping of the film edge are likely to occur during stretching, resulting in reduced runnability.
The pH of water in the monomer removal tank is preferably 6.5 to 9.0, more preferably 7.0 to 8.5, and still more preferably 7.5 to 8.0. When the pH of water is less than 6.5, oxidative degradation may progress in the resulting polyamide 6 resin film. Also, since the water in the monomer removal tank may attach to the film and come into contact with workers, alkaline water with a pH exceeding 9.0 is not favorable for safety.
In the monomer removal step, the time that the unstretched sheet of polyamide 6 resin is in contact with water depends on the temperature and pH of the water, but it is preferably 0.5 to 10 minutes, and more preferably 1 to 3 minutes. When the contact time is shorter than 0.5 minutes, it is difficult to remove the monomer sufficiently, and when the contact time is longer than 10 minutes, the step is too long, and furthermore, the unstretched sheet has a higher moisture content during stretching, which is not favorable.

(Water Absorption Treatment)

In the present invention, the unstretched sheet is preferably subjected to water absorption treatment after passing through the monomer removal step and prior to stretching, in order to adjust the moisture content to 2.0 to 5.0% by mass, and more preferably to 4.0 to 5.0% by mass. This water absorption treatment moderately plasticizes the unstretched sheet and suppresses crystallization of the polyamide 6 resin, thereby preventing the film from being cut during the stretching step. When the moisture content of the unstretched sheet is less than 2.0% by mass, the stretching stress is increased during the stretching step, resulting in troubles such as cutting and reduced runnability. On the other hand, when the moisture content exceeds 5.0% by mass, it is necessary to set a higher preheating temperature later, which may cause a problem of reduced thickness accuracy. The water absorption treatment for the unstretched sheet is preferably performed in a hot water tank whose temperature is adjusted to 40 to 90°C under conditions of 5 minutes or shorter, and especially preferably performed in a hot water tank whose temperature is adjusted to 50 to 80°C under conditions of 1 minute or shorter.

(Stretching)

The unstretched sheet is preferably preheated prior to the stretching step, and the preheating temperature is preferably 170°C or higher, and more preferably 185°C or higher. When the preheating temperature is lower than 170°C, the unstretched sheet may not be sufficiently dried of the moisture contained by the water absorption treatment described above and may be cut during the stretching step. Meanwhile, the preheating temperature is preferably 210°C or lower, and more preferably 200°C or lower. When the preheating temperature exceeds 210°C, the thickness accuracy of the film after stretching is reduced and the resulting laminated product may have reduced moldability. It is preferable that the preheating time is 1.5 to 4.0 seconds.
The stretching may be either uniaxial stretching or biaxial stretching, but from the viewpoint of improving tensile elongation at break in the machine direction (MD) and transverse direction (TD) of the film, biaxial stretching is preferred. By biaxial stretching, the polyamide 6 resin film demonstrates superior mechanical properties in MD and TD than in the unstretched state, and thus can meet the physical properties required for packaging materials. As the biaxial stretching method, either simultaneous biaxial stretching method or sequential biaxial stretching method can be employed.

Examples of the simultaneous biaxial stretching method include the tenter type simultaneous biaxial stretching method, in which a tenter is used to grasp both ends of the unstretched sheet and stretch the sheet in the MD direction as well as in the TD direction. The tenter type simultaneous biaxial stretching method is preferred over the tubular type simultaneous biaxial stretching method because it can produce a polyamide 6 resin film with superior thickness control.

The tenter type simultaneous biaxial stretching can be carried out using a pantograph type tenter, a screw type tenter, or a linear motor type tenter. The linear motor type tenter is preferred over other types of tenters because it allows for easier adjustment of the physical properties of the resulting film.

Also, in the sequential biaxial stretching, it is preferable that at least one direction, MD or TD, is stretched by a tenter, for example. This makes it possible to obtain a more uniform film thickness. Examples of the sequential biaxial stretching using a tenter include the following methods: (1) a method in which the unstretched sheet is stretched in MD by passing it through multiple rolls with different rotation speeds, and then the stretched film is stretched in TD by the tenter; and (2) a method in which the unstretched sheet is stretched in MD by the tenter, and then the stretched film is stretched in TD by the tenter. In terms of the physical properties of the resulting film, productivity, facilities, and other factors, the method (1) described above is preferred.

In the biaxial stretching, the stretching ratio is preferably 2.5 to 4.0 times for each of MD and TD, and more preferably 3.0 to 3.5 times. When the stretching ratio for MD and TD is less than 2.5 times, the film after stretching has uneven thickness and the thickness accuracy is reduced. On the other hand, when the stretching ratio for MD and TD exceeds 4.0 times, the shrinkage stress in the film after stretching is high, causing it to break during molding.

Also, in the stretching step of the production method of the present invention, it is preferable to perform stretching by setting the MD stretching ratio X and the TD stretching ratio Y to the ratios that satisfy the following formulas:

$$0.85 \leq X/Y \leq 0.95;$$

and

$$8.5 \leq X \times Y \leq 9.5.$$

When the stretching is performed without satisfying either one of the above formulas, the resulting polyamide 6 resin film may have poor balance of stress in the four directions, and the resulting laminated product may have difficulty demonstrating uniform moldability.

In the case of simultaneous biaxial stretching, the temperature at which the unstretched sheet is stretched is preferably 180 to 210°C, and more preferably 190 to 200°C.

(Heat Treatment)

The method for producing the polyamide 6 resin film of the present invention includes a step of carrying out heat treatment for the film after completing the stretching step under specific temperature conditions in at least three stages. The heat treatment step is carried out at set temperatures in at least three stages, which satisfy the relationships described below. Note that, in the present invention, the temperature of the last section of the stretching zone is referred to as the "final temperature of the stretching step (A(°C))", the temperatures of the initial section and last section of the heat treatment zone is referred to as the "initial temperature of the heat treatment step (B(°C))" and "final temperature of the heat treatment step (D(°C))", respectively, and the highest temperature of the heat treatment zone is referred to as the "highest temperature of the heat treatment step (C(°C))".

In the present invention, it is important that the initial temperature of the heat treatment step (B(°C)) is lower than the final temperature of the stretching step (A(°C)), and that the final temperature of the heat treatment step (D(°C)) is lower than the highest temperature of the heat treatment step (C(°C)). That is, in the production of polyamide 6 resin film, by carrying out a heat treatment step that satisfies the temperature conditions of A > B < C > D, it is possible to obtain a polyamide 6 resin film with the extrapolated melting initiation temperature specified in the present invention.

In addition, from the viewpoint of improving the extrapolated melting initiation temperature and improving the moldability, it is preferable to perform the heat treatment setting the temperatures to satisfy the formulas (1) to (3) below.

It is preferable that, while making the initial temperature of the heat treatment step (B(°C)) lower than the final temperature of the stretching step (A(°C)), as described above, the heat treatment is performed setting it at or above the temperature shown in the following formula (1):

$$A > B \geq 180 \quad (1).$$

That is, the initial temperature of the heat treatment step (B) is made lower than the final temperature of the stretching step (A), and the temperature difference (A - B) is preferably set to 3°C or more, and more preferably to 5°C or more. By starting the heat treatment step at a temperature lower than the final temperature of the stretching step, a phenomenon in which the film in the heat treatment step is drawn toward the stretching step side can be suppressed, and a more uniform film with a high degree of crystallinity can be obtained.

Meanwhile, the initial temperature of the heat treatment step (B) is preferably 180°C or higher, more preferably 185°C or higher, and still more preferably 190°C or higher, from the viewpoint of stretching stress relaxation. When the initial temperature of the heat treatment step is lower than 180°C, the relaxation of stretching stress is insufficient, and the resulting film may have degraded physical properties such as boiling water shrinkage factor.

In the present invention, it is preferable to perform the heat treatment setting the highest temperature of the heat treatment step (C(°C)) with respect to the initial temperature of the heat treatment step (B(°C)) to a temperature that satisfies the following formula (2):

$$B + 10 \leq C \leq 230 \quad (2).$$

That is, the highest temperature of the heat treatment step (C) is preferably 10°C or more, more preferably 15°C or more, and still more preferably 20°C or more higher than the initial temperature of the heat treatment step (B). By gradually increasing the temperature during the heat treatment step, the overall temperature of the film becomes uniform, resulting in more uniform crystallization when the film is cooled after the heat treatment step. Also, the highest temperature of the heat treatment step (C) is preferably 200°C or higher, more preferably 205°C or higher, and most preferably 210°C or higher. When the highest temperature of the heat treatment step (C) is lower than 200°C, stretching stress relaxation in the resulting film is insufficient, increasing the possibility of nonuniformity of physical properties in the film surface and the possibility of degraded physical properties such as boiling water shrinkage factor.

Meanwhile, the highest temperature of the heat treatment step (C) is preferably 230°C or lower, more preferably 225°C or lower, and still more preferably 220°C or lower, from the viewpoint of dynamic characteristics of the resulting film. It is widely known that high temperature heat treatment is effective in relaxation of stretching stress in films. However, when the highest temperature of the heat treatment step (C) exceeds 230°C, the resulting polyamide 6 resin film may have reduced mechanical strength and reduced moldability.

As mentioned above, it is preferable that, while making the final temperature of the heat treatment step (D(°C)) lower than the highest temperature of the heat treatment step (C(°C)), the heat treatment is performed setting it at or above the temperature shown in the following formula (3) :

$$C > D \geq C - 40 \quad (3).$$

That is, the final temperature of the heat treatment step (D) is made lower than the highest temperature of the heat treatment step (C), and the temperature difference (C - D) is preferably set to 10°C or more, and more preferably to 15°C or more.

Meanwhile, the temperature difference (C - D) is preferably 40°C or less, more preferably 30°C or less, and still more preferably 25°C or less.

By gradually lowering the temperature during the heat treatment step, the resulting film can be prevented from being rapidly cooled after the heat treatment step, resulting in a higher $T_{im}$.

The time of heat treatment step is preferably 1 second or longer from the viewpoint of stretching stress relaxation. When the time of heat treatment step is shorter than 1 second, the heat treatment may be completed before the stretching stress is relaxed in the film. Meanwhile, the time of heat treatment step is preferably 10 seconds or shorter, more preferably 9 seconds or shorter, and still more preferably 8 seconds or shorter, from the viewpoint of production efficiency.

(Relaxation Treatment)

In the present invention, it is preferable to subject the polyamide 6 resin film to relaxation treatment during or after the heat treatment step.

The relaxation ratio is preferably 1 to 10% for both MD and TD, and more preferably 5 to 8%. Even when the relaxation ratio is set to exceed 10%, the polyamide 6 resin film does not relax sufficiently and may come into contact with the production machine table, causing scratches and cuttings. To solve this problem, the relaxation treatment needs to be performed for a long time, which significantly reduces the production efficiency. On the other hand, when the relaxation ratio is less than 1%, the relaxation treatment needs to be performed at a high temperature in order to sufficiently reduce the boiling water shrinkage factor of the polyamide 6 resin film, and the polyamide 6 resin film may have degraded mechanical properties. Also, the ratio of the MD relaxation ratio to the TD relaxation ratio (MD/TD) is preferably 0.66 to 1.50, and more preferably 0.80 to 1.25. When the ratio of relaxation ratios (MD/TD) is less than 0.66 or exceeds 1.50, the polyamide 6 resin film has poor balance between the MD and TD boiling water shrinkage factors, and the resulting laminated product has reduced moldability.

The temperature of relaxation treatment is preferably 180 to 230°C, more preferably 190 to 215°C, and still more preferably 200 to 210°C.

It is preferable that the time of relaxation treatment is 1 to 10 seconds.

The relaxation treatment may be carried out simultaneously for MD and TD, or one may be carried out first and the other later.

<Laminated Product>

Although the polyamide 6 resin film of the present invention can be used alone, it can also be used as a laminated product with two or more layers in which the film is laminated with another layer, and in particular, it is preferable to use the film as a laminated product in which the polyamide 6 resin film and a sealant layer are each laminated as the outermost layers.

The laminated product of the present invention is suitable for use as a packaging material.

(Sealant Layer)

The sealant layer in the laminated product is preferably constituted by polyethylene, polypropylene, an olefin based copolymer, or an acid modified product or ionomer thereof, from the viewpoint of chemical resistance and thermal sealing properties. Examples of the olefin based copolymer include an ethylene-vinyl acetate copolymer (EVA), an ethylene-acrylic acid copolymer (EAA), and an ethylene-methacrylic acid copolymer (EMAA). Examples of the acid modified product include maleic anhydride modified polypropylene and maleic anhydride modified polyethylene.

The thickness of the sealant layer in the laminated product is preferably 30 to 200 μm from the viewpoint of dynamic characteristics, and the lower limit of thickness is more preferably 40 μm. When the laminated product is used as a packaging material for batteries, since the content is an electrolytic solution, the thickness is still more preferably 50 μm, and most preferably 70 μm. Meanwhile, from the viewpoint of heat sealability, the upper limit of thickness of the sealant layer is more preferably 180 μm.

As the method for laminating the sealant layer on the polyamide 6 resin film or a laminated product thereof, any known method can be used. Examples thereof include the heat lamination method and the extrusion lamination method, and from the viewpoint of heat resistance, the heat lamination method is preferred.

(Barrier Layer)

The laminated product of the present invention preferably has a barrier layer between the polyamide 6 resin film and the sealant layer, or at least the polyamide 6 resin film, the barrier layer, and the sealant layer are preferably laminated in this order.

Although not particularly limited, examples of the barrier layer include an inorganic barrier layer such as metal foil, aluminum vapor deposited film, or transparent vapor deposited film, and an organic barrier layer such as polyvinyl alcohol or ethylene-vinyl alcohol copolymer. As the barrier layer, one with high barrier properties is preferred, and especially, a metal foil is more preferred. Examples of the metal foil include aluminum foil, stainless steel foil, nickel foil, copper foil, titanium foil, and clad or plated foil of these metals. The thickness of the barrier layer is preferably 15 to 150 μm, and more preferably 20 to 100 μm. When the thickness of the barrier layer in the laminated product is 15 μm or more, pinhole generation can be prevented, and when the thickness is 150 μm or less, the moldability for deep drawing molding, stretch molding, and other processing is improved.

(Adhesive Layer)

In the present invention, each layer in the laminated product is preferably laminated using an adhesive layer. The adhesive layer can be formed using a known adhesive. Examples of the adhesive include a two component curing type polyester-urethane based resin, which uses a polyester resin as the main agent and a polyfunctional isocyanate compound as the curing agent, a polyether-urethane based resin, a polyurethane based adhesive, an acrylic adhesive, an epoxy based adhesive, an acid modified polyolefin based adhesive, an elastomer based adhesive, and a fluorine based adhesive. The thickness of the adhesive layer after drying is preferably 1 to 4 $\mu$m.

In addition to the aforementioned layers, another layer such as a primer layer (anchor coat layer: AC layer) or a coat layer may be provided in the laminated product of the present invention.

(Use of Laminated Product)

The laminated product having the polyamide 6 resin film of the present invention laminated therein has excellent moldability, and can be molded by preferably employing, for example, deep drawing molding using cold molding or stretch molding.

The laminated product of the present invention can be suitably used as a packaging material. The packaging material can be used for a variety of applications such as bags and containers for packaging various foods and industrial products. As the bag for packaging, for example, it can be used as various types of bag bodies such as pillow bags, gusset bags, and stand-up bags.

Examples of the packaging state of a product (packaged product) in which the contents are packaged by the packaging material of the present invention may include a state in which the contents are sealed from the outside by a bag for packaging or a container for packaging. The molding of the bag body may be performed according to a known method, and for example, deep drawing molding is suitably used for molding the exterior body of a lithium ion battery.

A battery of the present invention comprises power generating elements including an anode, a cathode, a separator, and an electrolyte, and an exterior body packaging these power generating elements, uses the packaging material of the present invention as the exterior body, and includes one in which the exterior body is arranged as the outermost layer of the battery.

Examples

Hereinafter, the present invention will be described more specifically with reference to Examples, but it is not limited to these Examples only.

(1) Peak Melting Temperature and Extrapolated Melting Initiation Temperature

The measurement was performed in accordance with JIS K7121:2012.

Specifically, 10 mg of a circular test piece was taken from the polyamide 6 resin film and sealed in an aluminum cell to fabricate the sample. Then, using an input compensation type differential scanning calorimeter (Pyris 1/DSC manufactured by PerkinElmer, Inc.), the DSC curve was obtained by holding the sample at an initial temperature of 50°C for 1 minute and then increasing the temperature to 260°C at a rate of 5°C/min. For the obtained DSC curve, smoothing was performed with a smoothing point of 10 over the entire area, and the peak melting temperature [°C] and the extrapolated melting initiation temperature [°C] of the polyamide 6 resin film were determined in the range of 150 to 230°C.

Note that the peak melting temperature ($T_{pm}$) was defined as the temperature at the apex of the melting peak, and the extrapolated melting initiation temperature ($T_{im}$) was defined as the temperature at the intersection of the straight line extending the baseline on the low temperature side to the high temperature side and the tangent line drawn at the point where the slope is maximum in the curve on the low temperature side of the melting peak.

(2) Heat Sealability (Number of Fusions)

The obtained laminated product was cut into the shape of a strip with a width of 20 mm $\times$ a length of 300 mm. Two cut pieces were overlapped with the sealant layers facing each other to form a test piece, and the test was performed as follows. Using a heat sealing device (TP-701G manufactured by Tester Sangyo Co., Ltd.), the test piece was heated on one side by a sealing bar with a sealing pressure of 9.8 N (1 kg/cm$^2$) and under the following three conditions for sealing temperature and sealing time: 200°C for 6 seconds, 200°C for 10 seconds, and 210°C for 6 seconds. The entire surface was heat sealed to form a heat sealed section (heat sealing section).

The heat sealing test described above was performed on 10 test pieces, and the number of test pieces in which the polyamide 6 resin film of the test piece was fused to the sealing bar was counted among the 10 test pieces. The number of test pieces in which the state of fusion to the sealing bar occurred is three or less for practical use, preferably one or less, and most preferably zero.

(3) Heat Sealability (Sealing Strength)

The obtained laminated product was cut into the shape with a width of 200 mm $\times$ a length of 300 mm. Two cut pieces were overlapped with the sealant layers facing each other, and using a heat sealing device (TP-701G manufactured by Tester Sangyo Co., Ltd.), heated on one side by a sealing bar with a sealing pressure of 9.8 N (1 kg/cm$^2$) and under the following three conditions for sealing temperature and sealing time: 200°C for 6 seconds, 200°C for 10 seconds, and 210°C for 6 seconds, and thus heat sealed.

The test piece obtained by the heat sealing was cut into a width of 15 mm with the sealing section and non-sealing section parallel to each other in the longitudinal direction, and after one day of moisture conditioning under a 23°C × 50% RH environment, the non-sealing sections were gripped with chucks using an autograph (AS-1S model manufactured by Shimadzu Corporation) and the T type peel test was carried out at a distance between the chucks of 3 cm and a tensile speed of 300 mm/min. The obtained heat sealing force was divided back by the width of test piece (15 mm) to obtain the heat sealing strength (N/cm). The higher the heat sealing strength, the better, but generally 40 N/cm or more is sufficient for practical use.

(4) Continuous Productivity

The heat sealing test described above (210°C for 6 seconds) was continuously performed on 50 test pieces, and the number of test pieces in which the polyamide 6 resin film of the test piece was fused to the sealing bar was counted among the 10 test pieces from the 41st to 50th. The number of test pieces in which the state of fusion to the sealing bar occurred is three or less for practical use, preferably one or less, and most preferably zero.

(5) Amount of Caprolactam Monomer Extracted in Film

[Preparation of Measurement Sample]

The obtained polyamide 6 resin film was cut into 0.5 cm squares and accurately weighed to obtain 0.5 g. This was taken in a 10 ml headspace bottle, 10 ml of distilled water was added thereto, and after sealing the bottle with a butyl rubber stopper and an aluminum cap, extraction was carried out in a boiling water bath (100°C) for 2 hours. After cooling, it was filtered through a 0.45 μm disc filter and used as the measurement sample. The measurement sample was subjected to HPLC measurement under the conditions below. Note that the detection limit of caprolactam monomer is 3 ppm.

[Calibration Curve]

By dissolving 0.1 g of caprolactam in 100 ml of distilled water and further diluting it to prepare a standard solution of 100 ppm, the calibration curve was obtained.

[HPLC Conditions]

Device: the HP 1100 HPLC system manufactured by Hewlett-Packard Company
Column: Waters Puresil 5μ C18 200 angstroms 4.6 mm × 250 mm (40°C)
Detector: UV 210 nm
Elution: Performed with a solution of methanol/water (volume ratio) = 35/75 for 12 minutes, then switched to a solution of methanol/water (volume ratio) = 100/0 over 3 minutes and performed for 30 minutes, then switched to a solution of methanol/water (volume ratio) = 35/75 over 5 minutes and performed for 20 minutes.
Flow rate: 0.7 ml/min
Injection volume: 10 μl, but 50 μl for a low concentration

[Calculation Method]

From the monomer in the sample detected under the above conditions, the mass of the monomer in the sample was calculated, and the value divided by the mass of the film was defined as the amount of monomer extracted (% by mass).

(6) Stresses at 5% and 15% elongation

An arbitrary point A on the film was defined as the central point, the MD in the stretching step during film production was defined as the reference direction (a) of 0 degrees, and the directions that form 45 degrees, 90 degrees, and 135 degrees clockwise from the reference direction (a) were defined as the measurement directions (b), (c), and (d), respectively. After the polyamide 6 resin film was subjected to moisture conditioning at 23°C × 50% RH for 2 hours, the film was cut into the shape of a strip of 100 mm in each measurement direction from the central point A and of 15 mm in the direction perpendicular to the measurement direction, which was used as the sample. For example, in the direction of 0 degrees, the sample (a length of 100 mm × a width of 15 mm) was cut out in the range of 30 mm to 130 mm from the central point A. The samples were cut out in the same manner for the other directions.

For these samples, the stresses at 5% and 15% elongation were each measured at a tensile speed of 100 mm/min using a tensile testing machine (AG-1S manufactured by Shimadzu Corporation) equipped with a load cell for 50 N measurement and a sample chuck.

(7) Erichsen Value

Based on JIS Z2247, the Erichsen value was determined by using an Erichsen testing machine (No. 5755 manufactured by Yasuda Seiki Seisakusho, Ltd.) and pressing the steel ball punch against the obtained laminated product at a predetermined pressing depth. The Erichsen value was measured every 0.5 mm. When using the laminated product for cold molding or deep drawing molding, the Erichsen value is preferably 5 mm or more, and more preferably 8 mm or more.

(8) Thickness Accuracy

An arbitrary point A on the film was defined as the central point, and the MD in the stretching step during film production was defined as the reference direction (direction of 0 degrees). After the polyamide 6 resin film was subjected to moisture conditioning at 23°C × 50% RH for 2 hours, the thickness was measured using a length gauge (HEIDENHAIN-METRO MT1287 manufactured by HEIDENHAIN) at the point 100 mm away from the central point A in each of the following eight directions: the reference direction (a), and the directions (b), (c), (d), (e), (f), (g), and (h) that form 45 degrees, 90 degrees, 135 degrees, 180 degrees, 225 degrees, 270 degrees, and 315 degrees clockwise from the reference direction, respectively.

Ten sets of measurements were repeated in the same manner, the standard deviation and average value of the measured values of the obtained 80 data points in total were calculated, and the coefficient of variation was determined using the following formula:

```
coefficient of variation (CV) = standard deviation ÷
average value.
```

(Polyamide 6 Resin)

In the present invention, the following polyamide 6 resins were used:

polyamide 6 resin A: A1030BRF manufactured by Unitika Ltd. ($T_{im}$ = 212°C) ; and
polyamide 6 resin B: Novamid 1022 manufactured by Mitsubishi Plastics, Inc. ($T_{im}$ = 215°C) .

Example 1

(Production of Polyamide 6 Resin Film)

Using the polyamide 6 resin A (relative viscosity of 3.23), it was melt extruded from a T-die at a temperature of 260°C and cooled on a drum at 15°C to obtain an unstretched sheet with a thickness of 150 μm.

The obtained unstretched sheet was guided into a monomer removal tank set at a temperature of 53°C and a pH of 7.9, and immersed in water for 1 minute as a monomer removal step. Then, the sheet was guided into a moisture adjustment tank at 60°C, immersed in water for 20 seconds as a moisture adjustment step, and allowed to absorb water such that the moisture content of the unstretched sheet was 4.0%.

The unstretched sheet, which had been subjected to the water absorption treatment, was guided into a linear motor driven tenter type simultaneous biaxial stretching machine, where the sheet was preheated at 190°C and then subjected to simultaneous biaxial stretching under conditions of a stretching temperature of 198°C, a final temperature of the stretching step (A) (the temperature of the last section among the 10 evenly distributed sections in the stretching zone) of 197°C, a MD stretching ratio of 2.9 times, and a TD stretching ratio of 3.2 times.

Next, the film after simultaneous biaxial stretching was subjected to heat treatment for 2.7 seconds in the heat treatment zone. Among the 10 evenly distributed sections in the heat treatment zone, the temperature of the initial section (section 1) (initial temperature of the heat treatment step (B)) was set to 192°C, the highest temperature of the heat treatment step (C) in the fourth section (section 4) was set to 215°C, and the temperature of the last section (section 10) (final temperature of the heat treatment step (D)) was set to 194°C. Thereafter, the film was subjected to relaxation treatment at a relaxation temperature of 205°C, a MD relaxation ratio of 6.0% and a TD relaxation ratio of 6.0% to obtain a polyamide 6 resin film with a thickness of 15 $\mu$m, one side of which was subjected to corona treatment, and the film was collected in the shape of a roll.

For the obtained film, the extrapolated melting initiation temperature ($T_{im}$) was 219.1°C and the peak melting temperature ($T_{pm}$) was 223.1°C. Also, the tensile strength at 5% elongation was 83.6 MPa at 0 degrees, 71.1 MPa at 45 degrees, 64.2 MPa at 90 degrees, and 71.1 MPa at 135 degrees, and the maximum value minus the minimum value was 19.4 MPa. In addition, the tensile strength at 15% elongation was 112.0 MPa at 0 degrees, 97.4 MPa at 45 degrees, 104.9 MPa at 90 degrees, and 125.8 MPa at 135 degrees, and the maximum value minus the minimum value was 28.4 MPa.

(Fabrication of Laminated Product)

On the surface of the obtained polyamide 6 resin film that had undergone corona treatment, a two component type polyurethane based adhesive (TM-K55/CAT-10L manufactured by Toyo-Morton, Ltd.) was applied such that the amount applied was 5 g/m$^2$ and dried at 80°C for 10 seconds. To the surface where the adhesive had been applied, an aluminum foil (thickness of 40 $\mu$m) was affixed as a barrier layer.

Next, to the aluminum foil surface, the above adhesive was applied under the same conditions, and an unstretched polypropylene film (RXC-22 by Mitsui Chemicals Tohcello Inc., thickness of 100 $\mu$m) was affixed to it as a sealant layer. Then, aging treatment was performed under an atmosphere of 40°C for 72 hours to fabricate a laminated product with a structure composed of polyamide 6 resin film/aluminum foil/unstretched polypropylene film.

Examples 2 to 11, 13, and Comparative Examples 1 to 4

Polyamide 6 resin films and laminated products were fabricated by the same method as in Example 1, except that the type of polyamide 6 resin and production conditions were changed to those shown in Table 1.

For the polyamide 6 resin film obtained in Comparative Example 1, the extrapolated melting initiation temperature ($T_{im}$) was 215.0°C and the peak melting temperature ($T_{pm}$) was 223.2°C. Also, the tensile strength at 5% elongation was 84.7 MPa at 0 degrees, 75.4 MPa at 45 degrees, 66.1 MPa at 90 degrees, and 74.0 MPa at 135 degrees, and the maximum value minus the minimum value was 18.6 MPa. In addition, the tensile strength at 15% elongation was 109.2 MPa at 0 degrees, 100.7 MPa at 45 degrees, 113.6 MPa at 90 degrees, and 128.6 MPa at 135 degrees, and the maximum value minus the minimum value was 27.9 MPa.

Example 12

Using the polyamide 6 resin A (relative viscosity of 3.23), it was melt extruded from a T-die at a temperature of 260°C and cooled on a drum at 15°C to obtain an unstretched sheet with a thickness of 150 $\mu$m.

The obtained unstretched sheet was guided into a moisture adjustment tank at 60°C without passing it through the monomer removal step, immersed in water for 20 seconds as a moisture adjustment step, and allowed to absorb water such that the moisture content of the unstretched sheet was 4.0%. Thereafter, the unstretched sheet was guided into a linear motor driven tenter type simultaneous biaxial stretching machine, where the sheet was preheated at 190°C and then subjected to simultaneous biaxial stretching under conditions of a stretching temperature of 198°C, a final temperature of the stretching step (A) (the temperature of the last section among the 10 evenly distributed sections in the stretching zone) of 197°C, a MD stretching ratio of 2.9 times, and a TD stretching ratio of 3.2 times.

Next, the film after simultaneous biaxial stretching was subjected to heat treatment for 2.7 seconds in the heat treatment zone. Among the 10 evenly distributed sections in the heat treatment zone, the temperature of the initial section (section 1) (initial temperature of the heat treatment step (B)) was set to 193°C, the highest temperature of the heat treatment step (C) in the fourth section (section 4) was set to 215°C, and the temperature of the last section (section 10) (final temperature of the heat treatment step (D)) was set to 194°C. Thereafter, the film was subjected to relaxation treatment at a relaxation temperature of 205°C, a MD relaxation ratio of 6.0% and a TD relaxation ratio of 6.0% to obtain a polyamide 6 resin film with a thickness of 15 $\mu$m, one side of which was subjected to corona treatment, and the film was collected in the shape of a roll.

Using the obtained polyamide 6 resin film, a laminated product was fabricated in the same manner as in Example 1.

Example 14

In the same manner as in Example 1, an unstretched sheet with a moisture content of 4.0% was obtained.

The unstretched sheet, which had been subjected to the water absorption treatment, was guided into a tenter type simultaneous biaxial stretching machine using a pantograph system, where the sheet was preheated at 190°C and then subjected to simultaneous biaxial stretching under conditions of a stretching temperature of 198°C, a final temperature of the stretching step (A) (the temperature of the last section among the 10 evenly distributed sections in the stretching zone) of 197°C, a MD stretching ratio of 2.9 times, and a TD stretching ratio of 3.2 times.

Next, the film after simultaneous biaxial stretching was subjected to heat treatment for 2.7 seconds in the heat treatment zone. Among the 10 evenly distributed sections in the heat treatment zone, the temperature of the initial section (section 1) (initial temperature of the heat treatment step (B)) was set to 192°C, the highest temperature of the heat treatment step (C) in the fourth section (section 4) was set to 215°C, and the temperature of the last section (section 10) (final temperature of the heat treatment step (D)) was set to 194°C. Thereafter, the film was subjected to relaxation treatment at a relaxation temperature of 205°C, a MD relaxation ratio of 6.0% and a TD relaxation ratio of 6.0% to obtain a polyamide 6 resin film with a thickness of 15 $\mu$m, one side of which was subjected to corona treatment, and the film was collected in the shape of a roll.

Using the obtained polyamide 6 resin film, a laminated product was fabricated in the same manner as in Example 1.

Example 15

In the same manner as in Example 1, an unstretched sheet with a moisture content of 4.0% was obtained.

The unstretched sheet, which had been subjected to the water absorption treatment, was stretched longitudinally by a MD stretching machine composed of a group of heated rollers with different peripheral speeds, at a stretching ratio of 2.9 times. Then, it was stretched transversely to 3.2 times by a tenter, thereby performing sequential stretching treatment. The transverse stretching temperature was set to 198°C, and the final temperature of the transverse stretching step (A) (the temperature of the last section among the 10 evenly distributed sections in the stretching zone) was set to 198°C.

Next, the film after sequential biaxial stretching was subjected to heat treatment for 2.7 seconds in the heat treatment zone. Among the 10 evenly distributed sections in the heat treatment zone, the temperature of the initial section (section 1) (initial temperature of the heat treatment step (B)) was set to 192°C, the highest temperature of the heat treatment step (C) in the fourth section (section 4) was set to 215°C, and the temperature of the last section (section 10) (final temperature of the heat treatment step (D)) was set to 194°C. Thereafter, the film was subjected to relaxation treatment at a relaxation temperature of 205°C, a MD relaxation ratio of 6.0% and a TD relaxation ratio of 6.0% to obtain a polyamide 6 resin film with a thickness of 15 $\mu$m, one side of which was subjected to corona treatment, and the film was collected in the shape of a roll.

Using the obtained polyamide 6 resin film, a laminated product was fabricated in the same manner as in Example 1.

Comparative Example 5

For a general purpose polyamide 6 resin film (Bonyl RX 15 $\mu$m manufactured by KOHJIN Film & Chemicals Co., Ltd.), the extrapolated melting initiation temperature ($T_{im}$), the peak melting temperature ($T_{pm}$), and other properties were measured, and a laminated product was fabricated in the same manner as in Example 1.

The conditions for producing the polyamide 6 resin films, the extrapolated melting initiation temperature, the peak melting temperature, the amount of monomer extracted, the difference between the maximum value and the minimum value of stress in the uniaxial tensile test, the coefficient of variation for thickness, the Erichsen value of the laminated products fabricated, and the heat sealing evaluation are shown in Tables 1 to 2.

[Table 1]

| | | | Production conditions | | | | | | | | | | | | Characteristics of polyamide 6 resin film | | | |
|---|---|---|---|---|---|---|---|---|---|---|---|---|---|---|---|---|---|---|---|
| | | Type of resin | Mono-mer re-moval step | Stretching step | | | | | | Heat treatment step | | | | | | Heat characteristics | | | |
| | | | | Type of bi-axial stretching | System | Ratio | | Final tempera-ture (A) | Tempera-ture differ-ence (A - B) | Initial tempera-ture (B) | Tempera-ture differ-ence (C - B) | Highest tempera-ture (C) | Tempera-ture differ-ence (C - D) | Final tempera-ture (D) | Extrapo-lated melting initiation tempera-ture ($T_{im}$) | Peak melting tempera-ture ($T_{pm}$) | Tempera-ture differ-ence ($T_{pm}$ - $T_{im}$) | Amount of mon-omer extract-ed |
| | | | | | | MD | TD | [°C] | [°C] | [°C] | [°C] | [°C] | [°C] | [°C] | [°C] | [°C] | [°C] | [% by mass] |
| Example | 1 | A | Per-formed | Simulta-neous | Linear motor | 2.9 | 3.2 | 197 | 5 | 192 | 23 | 215 | 21 | 194 | 219.1 | 223.1 | 4.0 | 0.004 |
| | 2 | A | Per-formed | Simulta-neous | Linear motor | 2.9 | 3.2 | 197 | 3 | 194 | 21 | 215 | 18 | 197 | 218.6 | 223.5 | 4.9 | 0.006 |
| | 3 | A | Per-formed | Simulta-neous | Linear motor | 2.9 | 3.2 | 197 | 1 | 196 | 21 | 217 | 23 | 194 | 217.2 | 223.2 | 6.0 | 0.005 |
| | 4 | A | Per-formed | Simulta-neous | Linear motor | 2.9 | 3.2 | 197 | 5 | 192 | 17 | 209 | 17 | 192 | 218.4 | 223.2 | 4.8 | 0.011 |
| | 5 | A | Per-formed | Simulta-neous | Linear motor | 2.9 | 3.2 | 197 | 5 | 192 | 12 | 204 | 16 | 188 | 217.5 | 223.6 | 6.1 | 0.003 |
| | 6 | A | Per-formed | Simulta-neous | Linear motor | 2.9 | 3.2 | 197 | 5 | 192 | 23 | 215 | 11 | 204 | 217.1 | 223.3 | 6.2 | 0.002 |
| | 7 | A | Per-formed | Simulta-neous | Linear motor | 2.9 | 3.2 | 197 | 5 | 192 | 23 | 215 | 7 | 208 | 216.6 | 223.1 | 6.5 | 0.007 |
| | 8 | A | Per-formed | Simulta-neous | Linear motor | 2.9 | 3.2 | 197 | 5 | 192 | 23 | 215 | 27 | 188 | 218.5 | 223.0 | 4.5 | 0.010 |
| | 9 | A | Per-formed | Simulta-neous | Linear motor | 2.9 | 3.2 | 197 | 5 | 192 | 23 | 215 | 35 | 180 | 217.7 | 223.4 | 5.7 | 0.003 |
| | 10 | A | Per-formed | Simulta-neous | Linear motor | 2.9 | 3.2 | 196 | 1 | 195 | 16 | 211 | 9 | 202 | 216.0 | 223.7 | 7.7 | 0.003 |

| | | Type of resin | Monomer removal step | Production conditions | | | | | | Characteristics of polyamide 6 resin film | | | |
| | | | | Stretching step | | | | | Heat treatment step | | | | | | Heat characteristics | | | |
| | | | | Type of biaxial stretching | System | Ratio | | Final temperature (A) | Temperature difference (A - B) | Initial temperature (B) | Temperature difference (C - B) | Highest temperature (C) | Temperature difference (C - D) | Final temperature (D) | Extrapolated melting initiation temperature (T$_{im}$) | Peak melting temperature (T$_{pm}$) | Temperature difference (T$_{pm}$ - T$_{im}$) | Amount of monomer extracted |
| | | | | | | MD | TD | [°C] | [°C] | [°C] | [°C] | [°C] | [°C] | [°C] | [°C] | [°C] | [°C] | [% by mass] |
| | 11 | A | Performed | Simultaneous | Linear motor | 2.9 | 3.2 | 197 | 5 | 192 | 39 | 231 | 28 | 203 | 219.5 | 223.3 | 3.8 | 0.007 |
| | 12 | A | Not performed | Simultaneous | Linear motor | 2.9 | 3.2 | 197 | 4 | 193 | 22 | 215 | 21 | 194 | 218.5 | 223.2 | 4.7 | 0.113 |
| | 13 | A | Performed | Simultaneous | Linear motor | 3.2 | 3.2 | 198 | 5 | 193 | 19 | 212 | 18 | 194 | 218.9 | 223.1 | 4.2 | 0.008 |
| | 14 | A | Performed | Simultaneous | Pantograph | 2.9 | 3.2 | 197 | 5 | 192 | 23 | 215 | 21 | 194 | 217.5 | 223.2 | 5.7 | 0.005 |
| | 15 | A | Performed | Sequential | --- | 2.9 | 3.2 | 198 | 6 | 192 | 23 | 215 | 21 | 194 | 217.4 | 223.3 | 5.9 | 0.012 |
| Comparative Example | 1 | A | Performed | Simultaneous | Linear motor | 2.9 | 3.2 | 196 | -3 | 199 | 21 | 220 | 20 | 200 | 215.0 | 223.2 | 8.2 | 0.018 |
| | 2 | A | Performed | Simultaneous | Linear motor | 2.9 | 3.2 | 196 | 6 | 190 | 0 | 190 | 5 | 185 | 215.1 | 223.1 | 8.0 | 0.004 |
| | 3 | A | Performed | Simultaneous | Linear motor | 2.9 | 3.2 | 197 | 5 | 192 | 23 | 215 | 0 | 215 | 213.7 | 223.1 | 9.4 | 0.005 |
| | 4 | B | Performed | Simultaneous | Linear motor | 2.9 | 3.2 | 197 | 5 | 192 | 23 | 215 | 0 | 215 | 213.5 | 223.0 | 9.5 | 0.005 |
| | 5 | Bonyl RX 15 μm manufactured by KOHJIN Film & Chemicals Co., Ltd. | | | | | | | | | | | | | 214.0 | 223.0 | 9.0 | 0.096 |

EP 4 029 905 A1

[Table 2]

| | | Characteristics of polyamide 6 resin film | | | Characteristics of laminated product | | | | | | | | |
|---|---|---|---|---|---|---|---|---|---|---|---|---|---|
| | | Tensile strength | | Thickness accuracy | Moldability | Heat sealability | | | | | | | Continuous productivity |
| | | At 5% elongation | At 15% elongation | | | 200°C×6s | | 200°C×10s | | 210°C×6s | | | |
| | | Maximum value minus minimum value | Maximum value minus minimum value | Coefficient of variation (cv) | Erichsen value | Number of fusions | Sealing strength | Number of fusions | Sealing strength | Number of fusions | Sealing strength | Number of fusions |
| | | [MPa] | [MPa] | | [mm] | [counts] | [N/cm] | [counts] | [N/cm] | [counts] | [N/cm] | [counts] |
| Example | 1 | 19.4 | 28.4 | 0.017 | 8.2 | 0 | 10.4 | 0 | 54.8 | 0 | 53.6 | 0 |
| | 2 | 15.3 | 21.3 | 0.018 | 8.9 | 0 | 10.3 | 0 | 55.8 | 0 | 54.2 | 0 |
| | 3 | 17.4 | 26.1 | 0.017 | 8.1 | 0 | 10.4 | 0 | 54.9 | 1 | 52.2 | 2 |
| | 4 | 28.1 | 34.3 | 0.017 | 7.3 | 0 | 10.8 | 0 | 58.3 | 0 | 57.7 | 0 |
| | 5 | 28.0 | 36.2 | 0.017 | 6.6 | 0 | 10.6 | 0 | 56.4 | 1 | 55.8 | 2 |
| | 6 | 19.5 | 29.3 | 0.019 | 8.2 | 0 | 10.3 | 0 | 57.9 | 1 | 56.4 | 1 |
| | 7 | 21.4 | 26.1 | 0.019 | 9.0 | 0 | 10.9 | 1 | 55.2 | 2 | 54.4 | 2 |
| | 8 | 19.8 | 27.2 | 0.019 | 8.8 | 0 | 10.9 | 0 | 56.1 | 1 | 55.5 | 0 |
| | 9 | 18.3 | 21.7 | 0.016 | 9.2 | 0 | 10.1 | 1 | 55.9 | 1 | 55.3 | 1 |
| | 10 | 25.0 | 30.9 | 0.017 | 7.6 | 0 | 10.3 | 2 | 48.1 | 3 | 46.1 | 2 |
| | 11 | 34.2 | 37.8 | 0.019 | 5.5 | 0 | 10.9 | 0 | 51.9 | 0 | 50.7 | 0 |
| | 12 | 22.2 | 37.6 | 0.018 | 7.0 | 0 | 10.7 | 0 | 55.5 | 0 | 54.0 | 3 |
| | 13 | 38.1 | 41.0 | 0.017 | 3.5 | 0 | 10.4 | 0 | 59.9 | 0 | 57.9 | 0 |
| | 14 | 23.8 | 29.0 | 0.016 | 7.4 | 0 | 10.2 | 0 | 56.7 | 1 | 54.9 | 1 |
| | 15 | 19.2 | 23.2 | 0.036 | 8.4 | 0 | 10.5 | 0 | 55.2 | 1 | 53.8 | 1 |

(continued)

| | | Characteristics of polyamide 6 resin film | | | Characteristics of laminated product | | | | | | | |
|---|---|---|---|---|---|---|---|---|---|---|---|---|
| | | Tensile strength | | Thickness accuracy | Moldability | Heat sealability | | | | | | Continuous productivity |
| | | At 5% elongation | At 15% elongation | | | 200°C×6s | | 200°C×10s | | 210°C×6s | | |
| | | Maximum value minus minimum value | Maximum value minus minimum value | Coefficient of variation (cv) | Erichsen value | Number of fusions | Sealing strength | Number of fusions | Sealing strength | Number of fusions | Sealing strength | Number of fusions |
| | | [MPa] | [MPa] | | [mm] | [counts] | [N/cm] | [counts] | [N/cm] | [counts] | [N/cm] | [counts] |
| Comparative Example | 1 | 18.6 | 27.9 | 0.019 | 8.1 | 0 | 10.6 | 4 | 56.8 | 5 | 55.2 | 6 |
| | 2 | 41.8 | 40.3 | 0.018 | 3.3 | 0 | 10.3 | 4 | 55.1 | 5 | 53.9 | 6 |
| | 3 | 17.7 | 28.2 | 0.02 | 9.0 | 0 | 10.7 | 6 | 61.9 | 7 | 60.9 | 8 |
| | 4 | 18.2 | 30.4 | 0.019 | 8.9 | 0 | 10.8 | 6 | 62.7 | 8 | 61.1 | 8 |
| | 5 | 12.4 | 9.8 | 0.0424 | 7.9 | 0 | 10.4 | 7 | 58.1 | 8 | 55.9 | 8 |

EP 4 029 905 A1

Since the values of $T_{im}$ of the polyamide 6 resin films of Examples 1 to 15 were in the range specified in the present invention, the obtained laminated products had excellent high temperature heat sealability and suppressed heat fusion to the sealing bar, and increased production speed and suppressed processing troubles were achieved.

For the polyamide 6 resin film of Example 1, the amount of monomer extracted was 0.1% by mass or less and the obtained laminated product was able to prevent partial melting of the monomer component during heat sealing, demonstrating heat sealability excellent for continuous production compared to the laminated product of Example 12.

Since the MD stretching ratio and TD stretching ratio of the polyamide 6 resin films of Examples 1 to 12 and 14 to 15 were under the most favorable conditions, the difference between the maximum value and the minimum value of each stress at 5% and 15% elongation in the uniaxial tensile test in each of the four directions all satisfied the suitable conditions, and the laminated products exhibited suitable Erichsen values, demonstrating excellent molding processability.

Since the values of $T_{im}$ of the polyamide 6 resin films of Comparative Examples 1 to 3 did not meet the range specified in the present invention, the polyamide 6 resin films in the laminated products were partially melted during heat sealing, resulting in heat fusion to the sealing bar.

In Comparative Example 4, the polyamide 6 resin with a high $T_{im}$ (215°C) was used instead of the polyamide 6 resin used in Comparative Example 3. However, since the conditions for producing the film did not meet the suitable conditions in the present invention, the $T_{im}$ of the film did not meet the range specified in the present invention, as in Comparative Example 3, and the polyamide 6 resin film in the laminated product was partially melted during heat sealing, resulting in heat fusion to the sealing bar.

In Comparative Example 5, the general purpose polyamide 6 resin film (Bonyl RX 15 $\mu$m manufactured by KOHJIN Film & Chemicals Co., Ltd.) was evaluated, but since it did not meet the $T_{im}$ specified in the present invention, the polyamide 6 resin film in the laminated product was partially melted during heat sealing, resulting in heat fusion to the sealing bar. Also, the fluctuation in thickness was large in this general purpose polyamide 6 resin film, probably due to the fact that it is produced by the tubular type film formation method.

**Claims**

1. A polyamide 6 resin film, having an extrapolated melting initiation temperature ($T_{im}$) of 216.0°C or higher when heated from 50°C to 260°C at a heating rate of 5°C/min in differential scanning calorimetry (DSC).

2. The polyamide 6 resin film according to claim 1, wherein an amount of caprolactam monomer extracted is 0.1% by mass or less.

3. The polyamide 6 resin film according to claim 1 or 2,
   wherein, in each of the following four directions on a surface of the polyamide 6 resin film: in an arbitrary point on the polyamide 6 resin film, an arbitrary direction defined as 0 degrees, and directions that form 45 degrees, 90 degrees, and 135 degrees clockwise from that direction, a difference between a maximum value and a minimum value of each stress at 5% elongation by a uniaxial tensile test is 35 MPa or less, and
   a difference between a maximum value and a minimum value of each stress at 15% elongation by a uniaxial tensile test is 40 MPa or less.

4. The polyamide 6 resin film according to any one of claims 1 to 3, wherein a coefficient of variation (CV) for thickness is 0.04 or less in the following eight directions on a surface of the polyamide 6 resin film: in an arbitrary point on the polyamide 6 resin film, an arbitrary direction defined as 0 degrees, and directions that form 45 degrees, 90 degrees, 135 degrees, 180 degrees, 225 degrees, 270 degrees, and 315 degrees clockwise from that direction.

5. The polyamide 6 resin film according to any one of claims 1 to 4, wherein the polyamide 6 resin film is biaxially oriented.

6. A laminated product, wherein the polyamide 6 resin film according to any one of claims 1 to 5 and a sealant layer are laminated.

7. The laminated product according to claim 6, comprising a barrier layer between the polyamide 6 resin film and the sealant layer.

8. The laminated product according to claim 6 or 7, wherein the sealant layer has a thickness of 100 to 200 $\mu$m.

9. A packaging material using the laminated product according to any one of claims 6 to 8.

**10.** A battery using the packaging material according to claim 9.

**EP 4 029 905 A1**

## INTERNATIONAL SEARCH REPORT

International application No.

PCT/JP2021/011402

### A. CLASSIFICATION OF SUBJECT MATTER

Int.Cl. C08J5/18(2006.01)i, B32B7/027(2019.01)i, B32B27/34(2006.01)i, H01M50/10(2021.01)i
FI: C08J5/18CFG, B32B27/34, B32B7/027, H01M50/10
According to International Patent Classification (IPC) or to both national classification and IPC

### B. FIELDS SEARCHED

Minimum documentation searched (classification system followed by classification symbols)
Int.Cl. C08J5/00-5/02, C08J5/12-5/22, B32B1/00-43/00, H01M50/00-50/198

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 10-6394 A (UNITIKA LTD.) 13 January 1998 (1998-01-13), claims, paragraphs [0002], [0020], table 1, examples | 1, 5-10<br>2-3<br>4 |
| X | JP 2000-289103 A (UNITIKA LTD.) 17 October 2000 (2000-10-17), paragraphs [0002], [0024], examples | 1, 5, 9 |
| Y | JP 2017-228358 A (SHOWA DENKO PACKAGING CO., LTD.) 28 December 2017 (2017-12-28), paragraphs [0040]-[0043] | 2 |
| Y | WO 2008/075461 A1 (UNITIKA LTD.) 26 June 2008 (2008-06-26), claims, examples | 2 |
| Y | WO 2017/217435 A1 (UNITIKA LTD.) 21 December 2017 (2017-12-21), claims, paragraphs [0021], [0022], examples | 3 |

☒ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    12 May 2021 | Date of mailing of the international search report<br>    25 May 2021 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

21

**INTERNATIONAL SEARCH REPORT**

| International application No. |
| --- |
| PCT/JP2021/011402 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 10-235730 A (UNITIKA LTD.) 08 September 1998 (1998-09-08), examples, comparative examples | 1-10 |
| A | JP 10-175255 A (UNITIKA LTD.) 30 June 1998 (1998-06-30), examples, table 2 | 1-10 |
| A | WO 2009/060618 A1 (UNITIKA LTD.) 14 May 2009 (2009-05-14), entire text, all drawings | 4 |

Form PCT/ISA/210 (second sheet) (January 2015)

| INTERNATIONAL SEARCH REPORT<br>Information on patent family members | International application No.<br>PCT/JP2021/011402 |

| | | |
|---|---|---|
| JP 10-6394 A | 13 January 1998 | (Family: none) |
| JP 2000-289103 A | 17 October 2000 | (Family: none) |
| JP 2017-228358 A | 28 December 2017 | (Family: none) |
| WO 2008/075461 A1 | 26 June 2008 | US 2010/0080985 A1<br>claims, examples<br>EP 2098560 A1<br>CN 101346418 A<br>TW 200835598 A |
| WO 2017/217435 A1 | 21 December 2017 | CN 109661420 A<br>TW 201811881 A |
| JP 10-235730 A | 08 September 1998 | (Family: none) |
| JP 10-175255 A | 30 June 1998 | (Family: none) |
| WO 2009/060618 A1 | 14 May 2009 | US 2010/0221554 A1<br>entire text, all drawings<br>EP 2223791 A1<br>CN 101842219 A<br>TW 200927455 A |

Form PCT/ISA/210 (patent family annex) (January 2015)

**EP 4 029 905 A1**

**Patent documents cited in the description**

- JP 2015156403 A
- JP 2016062805 A
- JP 2018196929 A